# EUROPÄISCHE PATENTSCHRIFT

(11) **EP 1 981 152 B1**
(45) Veröffentlichungstag und Bekanntmachung des Hinweises auf die Patenterteilung: **22.05.2013**
(21) Anmeldenummer: 08005640.1
(22) Anmeldetag: 26.03.2008
(51) Int. Cl.: H02K 5/22, H02K 41/03, H02K 11/00

(54) **Elektrische Linearantriebsvorrichtung**
Electric linear drive device
Dispositif d'entraînement linéaire électrique

(30) Priorität: 13.04.2007 DE 102007018258
(43) Veröffentlichungstag der Anmeldung: 15.10.2008
(73) Patentinhaber: FESTO AG & Co. KG, 73734 Esslingen (DE)
(72) Erfinder: Finkbeiner, Matthias, Dipl.-Ing., 71159 Mötzingen (DE); Gückel, Jürgen, 70794 Filderstadt (DE); Feyrer, Thomas, 73734 Esslingen (DE)
(74) Vertreter: Kocher, Mark Werner

(56) Entgegenhaltungen:
- EP-A1- 1 501 171
- US-A1- 2005 184 597

## Beschreibung

Die Erfindung betrifft eine elektrische Linearantriebsvorrichtung, wie sie beispielsweise aus der EP 1150416 A1, der DE 10244261 A1 oder der DE 29705315 U bekannt ist. Zur Steuerung oder Regelung der Linearbewegung oder zum Anfahren gewünschter Positionen ist üblicherweise eine Sensoreinrichtung zur Positionserfassung erforderlich. Sowohl die Sensoreinrichtung als auch das Spulensystem des Linearmotors müssen elektrisch angeschlossen beziehungsweise verdrahtet werden. Hierzu ist es wünschenswert, dass die entsprechenden elektrischen Leitungen vor Beschädigungen geschützt angeordnet und leicht verlegbar sind. Entsprechend sollten die damit zu verbindenden externen Leitungen oder Kabel in einfacher Weise anschließbar sein.

Die EP 1 501 171 A1 offenbart eine Steckverbindervorrichtung für Kleinservomotoren im Mittelspannungsbereich und umfasst eine erste Steckverbindereinheit für die Betriebsspannung und eine zweite Steckverbindereinheit für die Steuersignale, die beide um eine Kabeldurchführung an einem Gehäuseteil des Motors gehalten sind, wobei die beiden Steckverbindereinheiten lösbar steckbar miteinander verbindbare Stift- und Buchsenstecker besitzen. Um bei einer derartigen Steckverbindervorrichtung die Abmessungen wesentlich zu verringern, so dass sie beim An- und Einbau eines Kleinservomotors in bzw. an eine Maschine, Roboter oder sonstigen Gerät nicht stört, ist vorgesehen, dass die erste und die zweite Steckverbindereinheit in einem gemeinsamen Verbindergehäuse untergebracht sind, das mit seinem einen Ende am Motorenge häuseteil gehalten und an seinem anderen Ende ein Betriebsspannungskabel und ein davon separates Steuersignalkabel aufnimmt.

Aus der US 2005/0184597 ist ein Magnetlinearmotor bekannt, bei dem ein magnetischer Antrieb zum Erzeugen einer Bewegung entlang einer Bewegungsbahn vorgesehen ist und in dem eine Motorsteuerung in einem Motogehäuse untergebracht ist, wodurch die Notwendigkeit einer externen Motorsteuerung entfällt. Der Motor umfasst eine Schubstange, die die Bewegungsbahn bestimmt und die eine Anordnung von Magneten entlang des der Bewegungsbahn umfasst, um Magnetfelder entlang der Bewegungsbahn zur Erzeugung von magnetischen Antriebkräften zu erzeugen, wenn elektrische Spulen im Motorgehäuse mit elektrischer Energie versorgt werden. Das Motorgehäuse umfasst einen Gehäusekörper, elektrische Spulen und die Motorsteuerung sowie wenigstens eine Lagerfläche, die sich entlang einer Schiene erstreckt. Diese Schiene ermöglicht eine lineare Gleitbewegung des Motorgehäuses entlang der Bewegungsbahn. Ferner ist ein Sensor eines Wegmesssystems am Motorgehäuse angebracht, der eine auf der Schiene angeordnete Codierung abtasten kann.

Eine Aufgabe der vorliegenden Erfindung besteht darin, ein sicheres, leicht verlegbares und anschließbares elektrisches Leitungssystem zum Anschluss des Spulensystems des Linearmotors und der Sensoreinrichtung zu schaffen.

Diese Aufgabe wird erfindungsgemäß durch eine Linearantriebsvorrichtung mit den Merkmalen des Anspruchs 1 gelöst.

Da alle elektrischen Leitungen innerhalb des Basisgehäuses in Leitungskanälen verlegt sind, sind sie sicher geschützt vor Beschädigungen angeordnet und sind leicht in den Leitungskanälen verlegbar. Die gemeinsame Anschlussstelle ermöglicht den einfachen Anschluss externer Leitungen und Kabel über einen Anschlussverbinder. Dabei kann die Anschlussstelle in einfacher Weise durch eine isolierende Gieß- oder Spritzmasse sicher abgedichtet werden.

Durch die in den Unteransprüchen aufgeführten Maßnahmen sind vorteilhafte Weiterbildungen und Verbesserungen der im Anspruch 1 angegebenen Linearantriebsvorrichtung möglich.

Ein Gehäuse des Anschlussverbinders wird mittels wenigstens eines Dichtungselements dichtend an der Anschlussstelle montiert, insbesondere mittels Schrauben, sodass ein Eindringen von Feuchtigkeit zwischen dem Anschlussverbinder oder vom Anschlussverbinder zum Basisgehäuse wirksam verhindert wird.

Eine besonders vorteilhafte Anschlussstelle ist als kreisscheibenförmige Ausnehmung in der Linie des wenigstens einen Leitungskanals ausgebildet, wobei eine Ringscheibe als Verbindungselement zum Anschlussverbinder eingesetzt, insbesondere eingeschraubt ist. Diese kreisscheibenförmige Ausnehmung kann in variabler Weise entlang des wenigstens einen Leitungskanals angebracht werden, sodass die Anschlussstelle individuell wunschgemäß positionierbar ist. Durch die einsetzbare Ringscheibe ist jeweils in einfacher Weise die Verbindung zwischen Anschlussstelle und Anschlussverbinder herstellbar.

In vorteilhafter Weise ist die Ringscheibe in der Ausnehmung und/oder der Anschlussverbinder auf der Ringscheibe in verschiedenen Winkelstellungen parallel zur entsprechenden Oberfläche des Basisgehäuses montierbar ausgebildet, sodass die externen Leitungen in beliebigen Winkeln abgeführt werden können. Durch Ummontieren kann dieser Winkel auch noch nachträglich schnell und einfach verändert werden.

Die Abdichtung zwischen dem Gehäuse des Anschlussverbinders und der Anschlussstelle erfolgt zweckmäßigerweise dadurch, dass ein Dichtungselement zwischen dem Gehäuse des Anschlussverbinders und der Ringscheibe und ein Dichtungselement zwischen der Ringscheibe und der kreisscheibenförmigen Ausnehmung angeordnet ist.

Im Gehäuse des Anschlussverbinders sind bevorzugt elektrische Verbindungselemente zur Verbindung der aus dem Basisgehäuse herauskommenden Leitungen mit den externen Leitungen vorgesehen. Die elektrischen Verbindungselemente sind dadurch vor Feuchtigkeit abgedichtet im Gehäuse des Anschlussverbinders angeordnet.

Zur einfacheren Verlegung und zur elektrischen und/oder magnetischen Abschirmung sind separate Leitungskanäle im Basisgehäuse für die elektrischen Leitungen zum Linearmotor einerseits und für die elektrischen Leitungen zur Sensoreinrichtung andererseits angeordnet. Dadurch wird auch eine gegenseitige Abschirmung erreicht, wobei hierzu das Basisgehäuse aus einem elektrisch und/oder magnetisch abschirmenden Metall besteht.

Ein Ausführungsbeispiel der Erfindung ist in der Zeichnung dargestellt und in der nachfolgenden Beschreibung näher erläutert. Es zeigen:
- Figur 1: eine perspektivische Darstellung einer elektrischen Linearantriebsvorrichtung mit aufmontiertem Anschlussverbinder und
- Figur 2: eine Explosionsdarstellung des Bereichs der mit dem Anschlussverbinder versehenen Anschlussstelle.

Bei dem dargestellten Ausführungsbeispiel für eine elektrische Linearantriebsvorrichtung ist ein rohrförmiges, langgestrecktes Motorgehäuses eines Linearmotors 11 in einem flachen, quaderförmigen Basisgehäuse 12 fixiert. Dabei erstreckt sich der Linearmotor in einem entsprechenden Aufnahmekanal durch das Basisgehäuse 12 und ragt an einer Seite über dieses hinaus. Der Linearmotor 11 besitzt einen kreisförmigen Querschnitt, wobei auch andere Querschnittsformen möglich sind. Weiterhin kann der Linearmotor auch im Basisgehäuse integriert sein, das heißt, das Basisgehäuse bildet dann das Gehäuse des Linearmotors.

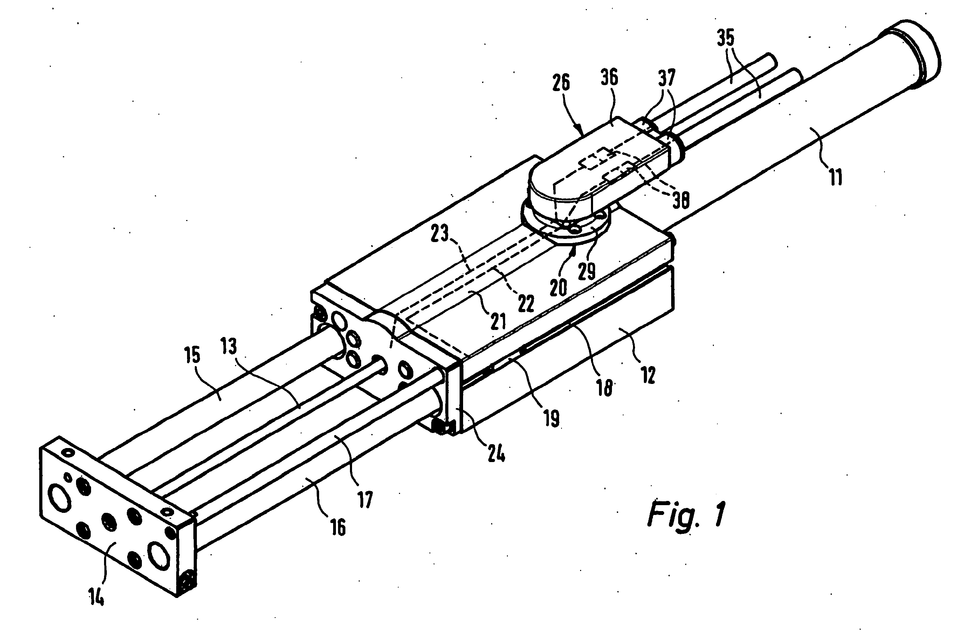

Wie aus dem eingangs angegebenen Stand der Technik hervorgeht, besteht ein derartiger Linearmotor 11 üblicherweise aus einem Spulensystem und einem eine aus mehreren Permanentmagneten bestehenden Permanentmagnetanordnung aufweisenden Läufer, der innerhalb des Gehäuses des Linearmotors 11 längsverschiebbar geführt ist. Dies ist in der perspektivischen Draufsicht der Figur 1 selbstverständlich nicht zu sehen. Im Ausführungsbeispiel bewegt sich der Läufer innerhalb des dazu relativ längeren Motorgehäuses des Linearmotors 11, der entsprechend ein Langspulensystem besitzt. Es sind auch Ausführungen mit einem Kurzspulensystem möglich, bei denen der längere Läufer aus dem Gehäuse des Linearmotors 11 heraus verschiebbar ist. In umgekehrter Weise sind auch Ausführungen möglich, bei denen das Spulensystem als Läufer ausgebildet ist.

Eine mit dem nicht zu sehenden Läufer des Linearmotors 11 verbundene Antriebsstange 13 erstreckt sich aus dem Gehäuse des Linearmotors 11 nach außen und ist mit ihrem entgegengesetzten Endbereich an einem plattenförmigen Antriebselement 14 fixiert, das selbstverständlich prinzipiell eine beliebige Form aufweisen kann.

Zwei zu beiden Seiten der Antriebsstange 13 parallel angeordnete Führungsstangen 15, 16 sind ebenfalls am Antriebselement 14 fixiert und erstrecken sich in Führungskanäle des Basisgehäuses 12 hinein, wo sie beispielsweise mittels Kugelbuchsenführungen oder anderen Linearführungen geführt sind. In einer alternativen Ausgestaltung kann auch eine andere Zahl von Führungsstangen vorgesehen sein, oder es werden überhaupt keine Führungsstangen verwendet, wobei dann die Antriebsstange 13 beziehungsweise der Läufer eine entsprechend aufwendigere Lagerung aufweist. Im eingangs angegebenen Stand der Technik sind Ausführungen ohne Führungsstangen dargestellt und beschrieben.

Zur Positionsmessung ist eine Positionsmessstange 17 ebenfalls am Antriebselement 14 fixiert und erstreckt sich in einen Aufnahmekanal im Basisgehäuse 12 hinein. In einem neben diesem Aufnahmekanal angeordneten parallelen Sensorkanal 18, der als nach außen offener, nutartiger Kanal ausgebildet ist, ist ein Positionssensor 19 angeordnet, der mit der Positionsmessstange 17 zusammenwirkt.

Zur Positionsmessung können verschiedene bekannte Messmethoden vorgesehen sein. Beispielsweise ist die Positionsmessstange 17 streifenförmig magnetisiert oder weist einen entsprechenden streifenförmig magnetisierten Magnetstreifen auf, der durch den als magnetempfindlicher Sensor ausgebildeten Positionssensor 19 abgetastet wird. Zusätzlich kann ein nicht dargestellter Sensor zur Erfassung einer oder mehrerer Bezugspositionen vorgesehen sein. Es können auch Reihenanordnungen von mehreren magnetfeldempfindlichen Sensoren, wie Hall-Elementen, vorgesehen sein, die entweder an einem Permanentmagneten vorbeigeführt werden oder ein solcher wird an der Reihenanordnung vorbeigeführt. Die Positionsmesseinrichtung kann auch an der Antriebsstange 13 oder einer der Führungsstangen 15, 16 angeordnet oder im Linearmotor 11 integriert sein. In diesem Falle kann die Positionsmesseinrichtung auch als Ultraschall- oder Mikrowellensensor ausgebildet sein. Auch bekannte indirekte Positionsmessverfahren durch Erfassung von Spulenspannungen beziehungsweise -strömen der Spulenanordnung des Linearmotors 11 können vorgesehen sein.

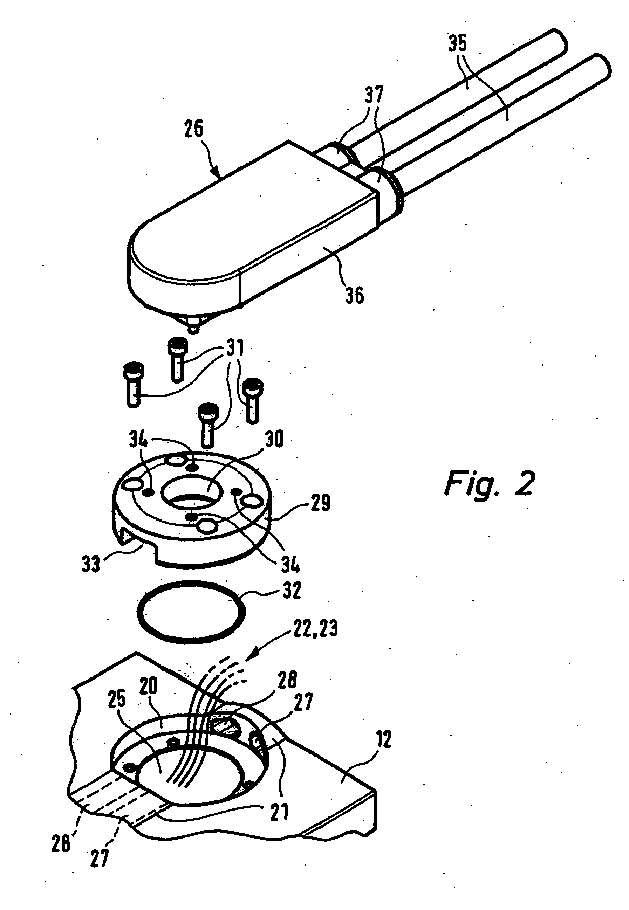

Alle elektrischen Leitungen der Linearantriebsvorrichtung verlaufen innerhalb des Basisgehäuses 12 in nur in Figur 2 zum Teil dargestellten Leitungskanälen 27, 28 und münden an einer gemeinsamen Anschlussstelle 20, die im Ausführungsbeispiel an der Oberseite des Basisgehäuses 12 angeordnet ist. Hierzu verlaufen insbesondere zwei separate Leitungskanäle 27, 28 in der Längsrichtung des Basisgehäuses 12 mittig nebeneinander, unterhalb einer abgerundeten Erhebung 21, die sich entsprechend in der Längsrichtung mittig erstreckt. Der eine Leitungskanal 27 dient dabei zur Aufnahme der Sensorleitungen 22 und der andere Leitungskanal 28 zur Aufnahme der Motorleitungen 23. Im Ausführungsbeispiel handelt es sich bei den Sensorleitungen 22 um Leitungen des Positionssensors 19, jedoch können auch alternative oder zusätzliche Sensorleitungen verlegt sein, wie zum Beispiel Sensorleitungen der vorstehend beschriebenen Sensorsysteme oder Sensoranordnungen, Temperatursensoren und dergleichen. Bei den Motorleitungen 23 handelt es sich um elektrische Steuerleitungen für den Linearmotor 11 und gegebenenfalls entsprechende Signalrückmeldungen. Je nach Anordnung von Sensoren oder Anschlüssen des Linearmotors 11 können die Leitungen auch von verschiedenen Seiten her an der Anschlussstelle 20 münden.

Neben den beiden mittigen, in Längsrichtung verlaufenden Leitungskanälen 27, 28 zur Aufnahme der Sensorleitungen 22 und der Motorleitungen 23 sind noch erforderliche Querkanäle im Basisgehäuse 12 enthalten, um die entsprechenden Leitungen von neben den mittigen Leitungskanälen 27, 28 angeordneten Komponenten den mittigen Leitungskanälen 27, 28 zuzuführen. Derartige Querkanäle können beispielsweise als Nuten an einer Stirnseite des Basisgehäuses 12 realisiert sein, wobei nach dem Verlegen der Leitungen dann diese Stirnseite durch einen Gehäusedeckel 24 abgeschlossen wird.

Die Anschlussstelle 20 ist als kreisscheibenförmige Ausnehmung ausgebildet und kann an beliebiger Stelle entlang der längsverlaufenden Leitungskanäle 27, 28 an der Oberseite des Basisgehäuses 12 in dieses eingeformt werden. Hierdurch werden automatisch die Verbindungen zwischen den Leitungskanälen 27, 28 und der Anschlussstelle 20 hergestellt. Nach dem Verlegen der Leitungen wird die Anschlussstelle 20 durch eine isolierende Gieß- oder Spritzmasse 25 abgedichtet, sodass gemäß Figur 2 die Sensor- und Motorleitungen 22, 23 gegen Feuchtigkeit abgedichtet aus der Anschlussstelle 20 austreten. Hierdurch kann entweder das Basisgehäuse 12 vollständig abgedichtet werden, wenn auch die übrigen Bereiche und Komponenten, wie Sensoren, der Linearmotor 11 und der Gehäusedeckel 24, entsprechend abgedichtet sind oder falls in sich abgedichtete Komponenten verwendet werden, brauchen die Leitungskanäle 27, 28 selbst nicht abgedichtet zu werden, und die Gieß- oder Spritzmasse 25 dient zur Abdichtung eines nachfolgend beschriebenen, an der Anschlussstelle 20 anschließbaren Anschlussverbinders 26.

Zur Montage des Anschlussverbinders 26 wird zunächst eine Ringscheibe 29 mit einer der Ausnehmung der Anschlussstelle 20 entsprechenden Geometrie in diese Ausnehmung eingesetzt. Die Sensor- und Motorleitungen 22, 23 werden dabei durch ein mittiges Loch 30 der Ringscheibe 29 hindurchgeführt. Die Ringscheibe 29 wird dabei mittels Schrauben 31 in der Anschlussstelle 20 fixiert, wobei prinzipiell auch andere Fixiermethoden einsetzbar sind, wie Verkleben oder dergleichen. Zwischen der Ringscheibe 29 und einem Bodenbereich der Ausnehmung der Anschlussstelle 20 wird ein Dichtring 32 positioniert. Falls, wie im Ausführungsbeispiel dargestellt, die Sensor- und Motorleitungen 22, 23 seitlich über einen nutartigen Kanal 33 in die Ringscheibe 29 einmünden, kann auch die fixierte Ringscheibe mittels der Gieß- oder Spritzmasse 25 abgedichtet beziehungsweise ausgegossen werden. Ein Dichtring 32 ist dann nicht erforderlich.

An die Ringscheibe 29 wird dann der Anschlussverbinder 26 montiert, beispielsweise angeschraubt, wobei wieder nicht dargestellte Dichtungsmittel, wie ein Dichtring, dazwischen positioniert werden. Durch mehrere symmetrisch angeordnete Befestigungslöcher 34 durch den Anschlussverbinder 26, die in gleichmäßigen Winkelabständen angeordnet sind, im Ausführungsbeispiel sind das jeweils 90°, kann der Anschlussverbinder 26 in verschiedenen Winkelpositionen montiert werden, um externe Kabel 35 aus einem gewünschten Winkel zuführen zu können.

In einer einfacheren Ausführung kann die Ringscheibe 29 auch einstückig am Anschlussverbinder 26 angeordnet sein, wobei dann ein Ausgießen der Ringscheibe 29 nicht mehr möglich ist und diese mittels des Dichtrings 32 in verschiedenen Positionen an der Anschlussstelle 20 abgedichtet montiert wird. Der nutartige Kanal 33 muss dann entfallen, und die Sensor- und Motorleitungen 22, 23 werden wie in Figur 2 dargestellt mittig aus der Anschlussstelle 20 und der eingefüllten Gieß- oder Spritzmasse 25 herausgeführt.

Der Anschlussverbinder 26 weist ein abgedichtetes Gehäuse 36 auf, in das die externen Kabel 35 über dichtende Kabeldurchführungen 37 eingeführt werden. Im Gehäuse 36 werden die Leitungen der externen Kabel 35 mit den Sensor- und Motorleitungen 22, 23 mittels elektrischer Verbindungselemente 38 verbunden.

Das Basisgehäuse 12 besteht beispielsweise aus elektrisch und/oder magnetisch abschirmendem Metall, sodass die in den Leitungskanälen 27, 28 verlegten Leitungen entsprechend abgeschirmt sind. Auch Leitungen, die in verschiedenen Leitungskanälen 27, 28 verlegt sind, erfahren eine gegenseitige Abschirmung.

## Patentansprüche

1. Elektrische Linearantriebsvorrichtung, mit einem in oder an einem Basisgehäuse (12) angeordneten elektrischen Linearmotor (11) und mit einer im oder am Basisgehäuse (12) angeordneten Sensoreinrichtung (17, 19) zur Erfassung wenigstens einer Position eines vom Linearmotor (11) angetriebenen Antriebselements (14), mit elektrischen Leitungen (22, 23), die von einem Spulensystem des Linearmotors (11) und von der Sensoreinrichtung (17, 19) durch wenigstens einen Leitungskanal (27, 28) innerhalb des Basisgehäuses (12) zu einer gemeinsamen Anschlussstelle (20) am Basisgehäuse (12) verlegt sind, und die sich durch die Anschlussstelle (20) zu einem Anschlussverbinder (26) erstrecken, der an der Anschlussstelle (20) angebracht ist und in dem Verbindungsmittel (38) zur Verbindung mit externen Leitungen oder Kabeln (35) angeordnet sind, wobei die Anschlussstelle (20) wenigstens im Bereich der austretenden Leitungen (22, 23) durch eine isolierende Gieß- oder Spritzmasse (25) abgedichtet ist, **dadurch gekennzeichnet, dass** separate Leitungskanäle (27, 28) im Basisgehäuse (12) für die elektrischen Leitungen (23) zum Linearmotor einerseits und für die elektrischen Leitungen (22) zur Sensoreinrichtung (17, 19) andererseits angeordnet sind, die an der gemeinsamen Anschlussstelle (20) ausmünden.

2. Linearantriebsvorrichtung nach Anspruch 1, **dadurch gekennzeichnet, dass** ein Gehäuse (36) des Anschlussverbinders (26) mittels wenigstens eines Dichtelements dichtend an der Anschlussstelle (20) montiert ist, insbesondere mittels Schrauben.

3. Linearantriebsvorrichtung nach Anspruch 1 oder 2, **dadurch gekennzeichnet, dass** die Anschlussstelle (20) als kreisscheibenförmige Ausnehmung in der Linie des wenigstens einen Leitungskanals (27, 28) ausgebildet ist, in die eine Ringscheibe (29) als Verbindungselement zum Anschlussverbinder (26) eingesetzt, insbesondere eingeschraubt ist.

4. Linearantriebsvorrichtung nach Anspruch 3, **dadurch gekennzeichnet, dass** die Ringscheibe (29) in der Ausnehmung der Anschlussstelle (20) und/oder der Anschlussverbinder (26) auf der Ringscheibe (29) in verschiedenen Winkelstellungen parallel zur entsprechenden Oberfläche des Basisgehäuses (12) montierbar ausgebildet ist.

5. Linearantriebsvorrichtung nach Anspruch 3 oder 4, **dadurch gekennzeichnet, dass** zur Abdichtung ein Dichtungselement zwischen dem Gehäuse des Anschlussverbinders (26) und der Ringscheibe (29) und ein Dichtungselement (25, 32) zur Abdichtung der Ringscheibe (29) in der kreisscheibenförmigen Ausnehmung der Anschlussstelle (20) angeordnet ist.

6. Linearantriebsvorrichtung nach Anspruch 5, **dadurch gekennzeichnet, dass** das Dichtungselement zur Abdichtung der Ringscheibe (29) in der kreisscheibenförmigen Ausnehmung der Anschlussstelle (20) eine Gieß- oder Spritzmasse (25) und/oder ein Dichtring (35) ist.

7. Linearantriebsvorrichtung nach einem der vorhergehenden Ansprüche, **dadurch gekennzeichnet, dass** im Gehäuse (36) des Anschlussverbinders (26) elektrische Verbindungselemente (38) zur Verbindung der aus dem Basisgehäuse herauskommenden Leitungen (22, 23) mit den externen Leitungen oder Kabeln (35) vorgesehen sind.

8. Linearantriebsvorrichtung nach einem der vorhergehenden Ansprüche, **dadurch gekennzeichnet, dass** die wenigstens zwei Leitungskanäle (27, 28) in der Längsrichtung des Basisgehäuses nahe dessen Oberfläche verlaufen, die insbesondere nebeneinander angeordnet sind.

9. Linearantriebsvorrichtung nach einem der vorhergehenden Ansprüche, **dadurch gekennzeichnet, dass** das Basisgehäuse (12) aus einem elektrisch und/oder magnetisch abschirmenden Metall besteht.

## Claims

1. Electrical linear drive device with an electric linear motor (11) mounted in or on a base housing (12) and with a sensor device (17, 19), mounted in or on a base housing (12), for detecting at least one position of a drive element (14) driven by the linear motor (11), with electrical lines (22, 23) which are laid from a coil system of the linear motor (11) and from the sensor device (17, 19) through at least one cable duct (27, 28) within the base housing (12) to a common point of connection (20) on the base housing (12), and which extend through the point of connection (20) to a terminal connector (26) which is attached at the point of connection (20) and in which are provided connection means (38) for connection to external lines or cables (35), wherein the point of connection (20) is sealed at least in the area of the outgoing lines (22, 23) by an insulating casting or spraying compound (25), **characterised in that** separate cable ducts (27, 28) are provided in the base housing (12) for the electrical lines (23) to the linear motor on the one hand, and for the electrical lines (22) to the sensor device (17, 19) on the other hand, opening out at the common point of connection (20).

2. Linear drive device according to claim 1, **characterised in that** a housing (36) of the terminal connector (26) is mounted with sealing at the point of connection (20) by means of at least one seal element, in particular by means of screws.

3. Linear drive device according to claim 1 or 2, **characterised in that** the point of connection (20) is in the form of a circular-disc-shaped recess in the line of the cable duct or ducts (27, 28), into which a washer (29) is inserted , in particular screwed in, as connection element to the terminal connector (26).

4. Linear drive device according to claim 3, **characterised in that** the washer (29) may be fitted into the recess of the point of connection (20) and/or the terminal connector (26) on the washer (29) in various angle positions parallel to the relevant surface of the base housing (12).

5. Linear drive device according to claim 3 or 4, **characterised in that** for sealing a seal element is fitted between the housing of the terminal connector (26) and the washer (29), and a seal element (25, 32) for sealing the washer (29) in the circular-disc-shaped recess of the point of connection (20).

6. Linear drive device according to claim 5, **characterised in that** the seal element for sealing the washer (29) in the circular-disc-shaped recess of the point of connection (20) is a casting or spraying compound (25) and/or a sealing ring (35).

7. Linear drive device according to any of the preceding claims, **characterised in that** electrical connecting elements (38) are provided in the housing (36) of the terminal connector (26) for connecting the lines (22, 23) coming from the base housing to the external lines or cables (35).

8. Linear drive device according to any of the preceding claims, **characterised in that** the two or more cable ducts (27, 28) run in the axial direction of the base housing close to its surface, and are arranged in particular adjacent to one another.

9. Linear drive device according to any of the preceding claims, **characterised in that** the base housing (12) is made of an electrical and/or magnetic shielding material.

## Revendications

1. Dispositif d'entraînement linéaire électrique, comprenant un moteur linéaire électrique (11) disposé dans ou sur un boîtier de base (12) et un dispositif de détection (17, 19) disposé dans ou sur le boîtier de base (12) pour détecter au moins une position d'un élément d'entraînement (14) entraîné par le moteur linéaire (11), avec des lignes électriques (22, 23) posées en partant d'un système de bobines du moteur linéaire (11) et du dispositif de détection (17, 19) en passant par au moins un passage de câble (27, 28) à l'intérieur du boîtier de base (12) jusqu'à un point de raccordement commun (20) sur le boîtier de base (12), et qui s'étendent à travers le point de raccordement (20) jusqu'à un connecteur de raccordement (26) attaché au point de raccordement (20) et dans lequel sont disposés des moyens de connexion (38) pour une connexion à des lignes ou câbles (35) externes, dans lequel le point de raccordement (20) est colmaté au moins au niveau des lignes sortantes (22, 23) par une matière isolante à couler ou à mouler (25), **caractérisé en ce que** des passages de câble séparés (27, 28) sont disposés dans le boîtier de base (12) pour les lignes électriques (23) jusqu'au moteur linéaire d'une part et pour les lignes électriques (22) jusqu'au dispositif de détection (17, 19) d'autre part et qui débouchent au point de raccordement commun (20).

2. Dispositif d'entraînement linéaire selon la revendication 1, **caractérisé en ce qu'**un boîtier (36) du connecteur de raccordement (26) est monté de manière étanche au niveau du point de raccordement (20) au moyen d'au moins un élément d'étanchéité, en particulier au moyen de vis.

3. Dispositif d'entraînement linéaire selon la revendication 1 ou 2, **caractérisé en ce que** le point de raccordement (20) est réalisé comme un creux de forme circulaire sur la ligne dudit au moins un passage de câble (27, 28) dans lequel un disque lisse (29) est placé, en particulier vissé, en tant qu'élément de connexion avec le connecteur de raccordement (26).

4. Dispositif d'entraînement linéaire selon la revendication 3, **caractérisé en ce que** le disque lisse (29) est réalisé de manière à pouvoir être monté dans le creux du point de raccordement (20) et/ou le connecteur de raccordement (26) est réalisé de manière à pouvoir être monté sur le disque lisse (29) dans différentes positions angulaires en parallèle à la surface correspondante du boîtier de base (12).

5. Dispositif d'entraînement linéaire selon la revendication 3 ou 4, **caractérisé en ce que** pour le colmatage, un élément d'étanchéité est disposé entre le boîtier du connecteur de raccordement (26) et le disque lisse (29) et un élément d'étanchéité (25, 32) est disposé pour colmater le disque lisse (29) dans le creux de forme circulaire du point de raccordement (20).

6. Dispositif d'entraînement linéaire selon la revendication 5, **caractérisé en ce que** l'élément d'étanchéité pour colmater le disque lisse (29) dans le creux de forme circulaire du point de raccordement (20) est une matière à couler ou à mouler (25) et/ou une bague d'étanchéité (35).

7. Dispositif d'entraînement linéaire selon l'une quelconque des revendications précédentes, **caractérisé en ce que** dans le boîtier (36) du connecteur de raccordement (26), des éléments de connexion électriques (38) sont prévus pour connecter les lignes (22, 23) sortant du boîtier de base aux lignes ou câbles externes (35).

8. Dispositif d'entraînement linéaire selon l'une quelconque des revendications précédentes, **caractérisé en ce que** lesdits au moins deux passages de câble (27, 28) s'étendent dans la direction longitudinale du boîtier de base près de la surface de celui-ci et sont en particulier disposés l'un à côté de l'autre.

9. Dispositif d'entraînement linéaire selon l'une quelconque des revendications précédentes, **caractérisé en ce que** le boîtier de base (12) est composé d'un métal de blindage électrique et/ou magnétique.
